# DEMANDE DE BREVET EUROPEEN

(11) **EP 0 871 269 A1**
(43) Date de publication de la demande: **14.10.1998**
(21) Numéro de dépôt: 98400815.1
(22) Date de dépôt: 06.04.1998
(51) Int. Cl.: H02B 13/035

(54) **Caisson métallique étanche pour cellule de distribution d'énergie électrique**

(30) Priorité: 08.04.1997 FR 9704262
(71) Demandeur: GEC ALSTHOM T ET D SA, 75116 Paris (FR)
(72) Inventeur: Berry, Pierre, 34420 Cers (FR); Starck, Thierry, 34160 Castries (FR)
(74) Mandataire: Gosse, Michel

(57) **Abrégé**

Caisson métallique étanche pour cellule de distribution électrique moyenne tension destinée à être équipée d'un appareillage, comportant au moins un appareil de coupure prévu relié à des circuits électriques extérieurs par l'intermédiaire de traversées de courant étanches.

Le caisson comporte un élément creux (4) qui est doté de parois rectangulaires et qui est prévu fermé de part et d'autre par deux panneaux d'extrémité (5, 5'). Cet élément est constitué d'une bande de tôle métallique, initialement plane, dont les extrémités ont été soudées en bout après une succession de pliages de même sens réalisés selon au moins trois lignes parallèles de pliure transversale permettant de délimiter au moins quatre panneaux dont les deux extrêmes sont alignés et soudés bout à bout pour former l'une des parois latérales que comporte ledit élément.

## Description

L'invention concerne un caisson métallique étanche pour cellule de distribution électrique moyenne tension équipée d'un appareillage, comportant au moins un appareil de coupure, tel par exemple un disjoncteur, destiné à être relié à des circuits électriques extérieurs par des liaisons se connectant à l'appareillage logé dans le caisson par l'intermédiaire de traversées de courant étanches, le caisson étant prévu rempli d'un gaz diélectrique de protection.

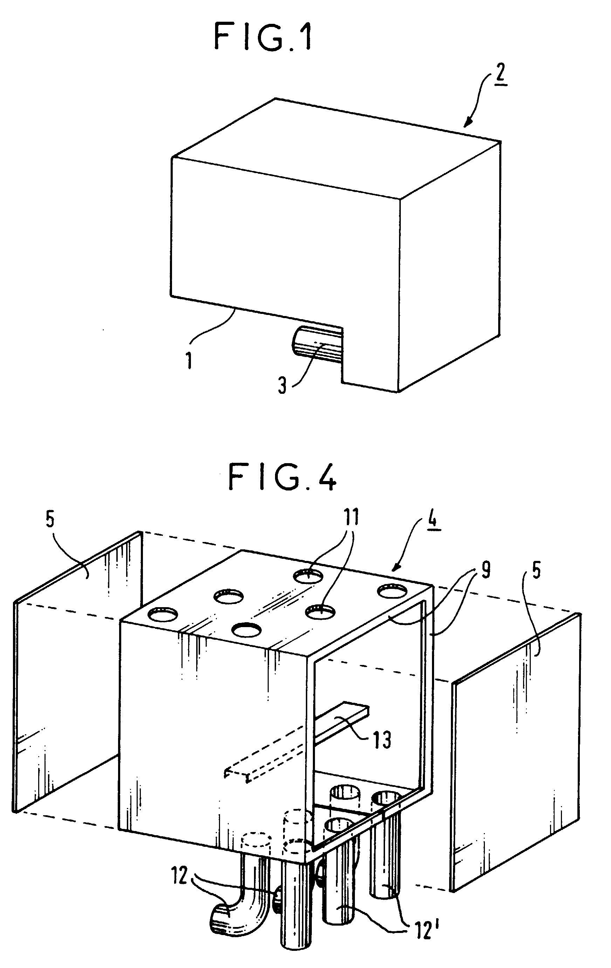

Il est classique de raccorder des câbles de liaison électrique par des prises en équerre sous un caisson de cellule électrique de distribution moyenne tension. Un tel raccordement a conduit à des réalisations telles que celle qui est schématisée sur la figure 1 où un décrochement 1 est réalisé à la partie inférieure d'un caisson 2 ayant classiquement une forme de prisme rectangulaire à base polygonale pour permettre de recevoir des tubes 3 en extrémité desquels sont fixées des traversées de courant permettant le raccordement de câbles par l'intermédiaire de connecteurs, non représentés.

De tels caissons sont classiquement réalisés à l'aide de tôles métalliques découpées et pliées qui sont assemblées de manière à délimiter un volume interne étanche, permettant notamment de remplir le caisson d 'un gaz diélectrique de protection. Le soudage est classiquement utilisé en phase d'assemblage d'un caisson dans la mesure où il permet de solidariser de manière quasi-définitive au moins certains des éléments métalliques constituant le caisson.

La présence d'un décrochement tel que mentionné ci-dessus complique la réalisation du caisson et conduit souvent à une augmentation du nombre de soudures, des caissons connus comportent ainsi au moins deux éléments de tôle pliés qui sont soudés l'un à l'autre de manière à former un élément creux à parois rectangulaires dont les deux extrémités sont prévues pour être fermées par des panneaux au moins initialement indépendants. De telles réalisations ne sont pas toujours suffisamment fiables, notamment sur le plan de l'étanchéité, dans la mesure où la réalisation de soudures étanches de grande longueur est délicate, en particulier dans le cas de soudures d'angle.

L'invention propose donc un caisson métallique étanche pour cellule de distribution électrique moyenne tension destinée à être équipée d'un appareillage, comportant au moins un appareil de coupure, prévu relié à des circuits électriques extérieurs par l'intermédiaire de traversées de courant étanches.

Selon une caractéristique de l'invention, le caisson comporte un élément creux, à parois rectangulaires ou carrées et à section transversale rectangulaire ou carrée, qui est prévu fermé par deux panneaux d'extrémité, cet élément étant notamment porteur de tubes unipolaires, cintrés ou droits, montés au niveau d'ouvertures ménagées dans celle des parois de l'élément creux qui est destinée à constituer le dessous du caisson pour permettre un passage de conducteurs électriques par l'intermédiaire de traversées de courant étanche entre l'intérieur et l'extérieur du caisson.

Selon une caractéristique de l'invention, le caisson comporte un élément creux, à parois rectangulaires ou carrées et à section transversale rectangulaire ou carrée, qui est prévu fermé par deux panneaux d'extrémité et qui est constitué d'une bande de tôle métallique, initialement plane, dont les extrémités ont été soudées en bout après une succession de pliages de même sens réalisés selon au moins trois lignes parallèles de pliure transversale permettant de délimiter au moins quatre panneaux dont les deux extrêmes sont alignés et soudés bout à bout pour former l'une des parois que comporte ledit élément.

Selon une caractéristique de l'invention, le caisson comporte un élément creux dont une des parois est dotée d'une série d'ouvertures pour des traversées de courant qui sont alignées sur au moins un rang dans la paroi qui les comporte et selon un axe d'alignement disposé obliquement par rapport aux bords du panneau constituant cette paroi.

Selon une caractéristique de l'invention, le caisson comporte un élément creux dont une paroi est dotée d'une série d'ouvertures pour des traversées de courant qui sont alignées sur au moins un rang dans cette paroi selon un axe d'alignement proche d'une des extrémités de l'élément et parallèle au bord du ou des deux panneaux alignés de cette paroi, à cette extrémité.

Selon une caractéristique de l'invention, le caisson comporte un élément dont une première paroi, formée par deux panneaux alignés et soudés bout à bout, comporte une série d'ouvertures pour des traversées de courant qui sont alignées sur au moins un rang selon un axe d'alignement proche d'une des extrémités du tube et parallèle au bord formé par la paroi qui les comporte à cette extrémité et dont une autre paroi parallèle à la première paroi comporte une série d'ouvertures pour des traversées de courant qui sont alignées sur au moins un rang selon un axe d'alignement disposé obliquement par rapport aux bords du panneau constituant cette autre paroi.

Selon une caractéristique de l'invention, le caisson comporte un élément creux ayant des portions de bande qui sont obtenues par deux pliages initiaux, égaux et de sens opposés, ménagés selon deux lignes de pliure parallèles aux rives de la bande plane initiale, et qui saillent vers l'intérieur de l'élément creux à parois rectangulaires aux extrémités de ce dernier perpendiculairement aux panneaux qui les portent respectivement.

Selon une caractéristique de l'invention, le caisson comporte un élément creux ayant des portions de bande obtenues par deux pliages initiaux, égaux et de sens opposés, ménagés selon deux lignes de pliure parallèles aux rives de la bande plane initiale, qui saillent vers l'intérieur de l'élément creux à parois rectangulaires formant ceinture aux extrémités de cet élément perpendiculairement aux panneaux, ont subi un pliage supplémentaire donnant naissance à une bordure externe sur chacune des deux rives des panneaux de ceinture, les deux bordures externes d'un panneau étant parallèles à ce panneau qui les porte.

Selon une caractéristique de l'invention, le caisson comporte un élément creux dont les panneaux de fermeture sont respectivement bordés sur leurs quatre côtés par autant d'éléments de bande saillants réalisés chacun par pliage à angle droit d'un des bords de panneau, dans la même direction pour les quatre éléments de bande ainsi formés.

Selon une caractéristique de l'invention, le caisson comporte une traverse métallique de renfort positionnée en partie centrale de caisson entre deux parois latérales parallèles de l'élément en forme de tube aux quelles elle est fixée.

L'invention, ses caractéristiques et ses avantages sont précisés dans la description qui suit en liaison avec les figures évoquées ci-dessous.

La figure 1 présente une vue schématique d'un exemple de caisson connu présenté en perspective.

La figure 2 présente une tôle métallique prédécoupée pour un élément creux formant ceinture pour caisson selon l'invention.

La figure 3 présente une tôle pour élément creux formant ceinture selon la figure 2, après une première opération de pliage et avant soudage.

La figure 4 présente une vue éclatée d'un caisson comportant un élément creux formant ceinture obtenu par pliage et soudage à partir de la tôle présentée sur la figure 3.

La figure 5 présente une coupe transversale d'un élément creux de caisson selon l'invention.

La figure 6 présente une vue en perspective d'une variante de caisson comportant un élément creux tel que représenté en figure 5.

La figure 7 présente une coupe transversale d'un élément creux de caisson selon l'invention.

la figure 8 présente une vue en perspective d'une variante de caisson comportant un élément creux tel que représenté en figure 7.

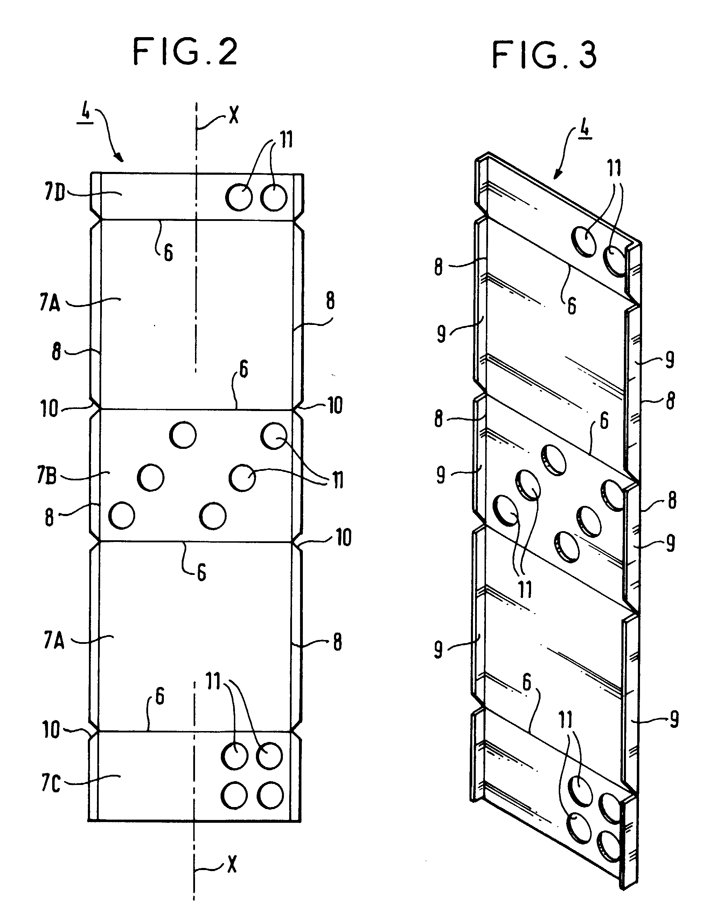

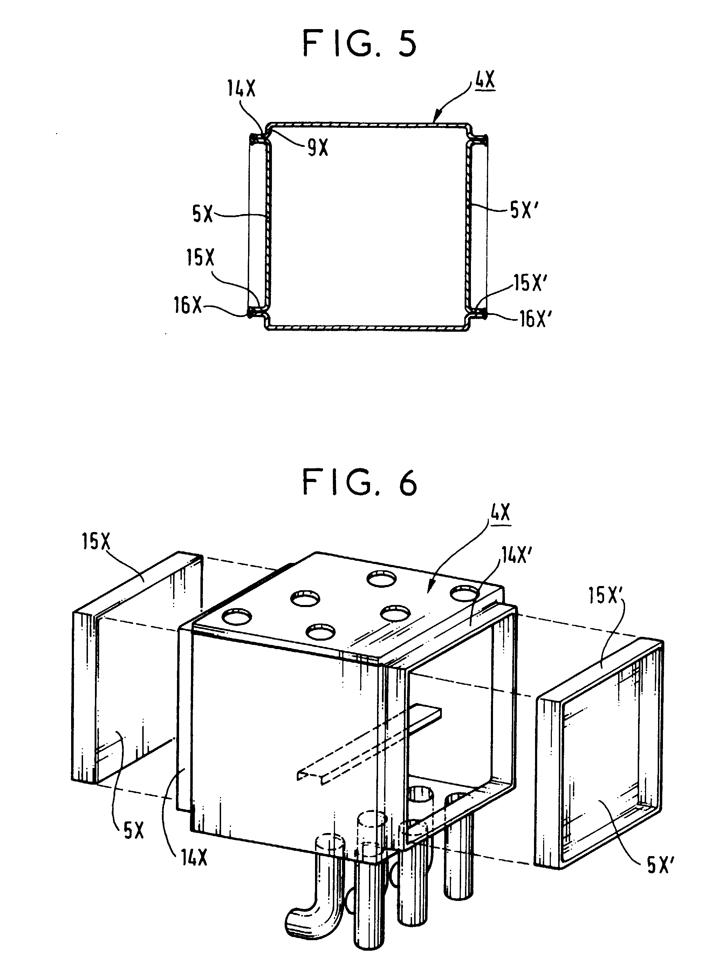

La bande de tôle métallique 4 présentée sur la figure 2 est destinée à être pliée puis soudée de manière à constituer un élément creux à parois rectangulaires formant ceinture, telle l'élément creux à quatre parois rectangulaires montré sur la figure 4 et ici référencé 4 de même que la bande dont elle est issue.

Deux panneaux 5, 5', réalisés par exemple en tôle métallique, sont destinés à venir se placer chacun à une des deux extrémités de l'élément creux pour constituer un caisson fermé avec cet élément. Ce dernier est ici supposé avoir une section transversale rectangulaire, voire carrée, de manière à former un prisme à base rectangulaire, voire un cube.

L'élément creux 4, à parois latérales rectangulaires ou carrées, qui est présenté en figure 4 est supposé obtenu par découpe d'une bande d'allure rectangulaire telle que montrée en figure 1 à partir d'un flan métallique initialement plan. La bande a une largeur légèrement supérieure à celle de l'élément et une longueur correspondant au périmètre d'une section transversale de cet élément qui est bouclé comme une ceinture par pliage et qui est rendu continu par soudure bout à bout des deux extrémités de la bande initiale.

Le pliage de la bande 4 s'effectue selon des lignes de pliure transversales 6 qui selon l'invention sont au moins au nombre de trois et préférablement de quatre de manière à déterminer au moins quatre et préférablement cinq panneaux permettant de réaliser un élément creux formant ceinture, à quatre parois latérales rectangulaires de la manière décrite ci-dessous. Dans une forme préférée de réalisation, quatre lignes de pliure transversales 6 sont prévues sur la bande 4, encore plane, de manière à définir deux panneaux 7A de mêmes dimensions de part et d'autre d'un même panneau 7B, alors central, et deux panneaux extrêmes 7C et 7D qui sont constitués par les extrémités de bande et dont la somme des dimensions respectives, selon l'axe longitudinal XX de la bande, est égale à la dimension du panneau central 7B, selon ce même axe longitudinal XX.

Quatre pliages de même sens et à angle droit selon chacune des quatre lignes de pliure transversales 6 permettent d'obtenir un élément creux comportant quatre faces ayant les mêmes dimensions, au moins deux par deux, comme le montre la figure 4. L'une de ces quatre faces est alors constituée par les deux panneaux extrêmes 7C, 7D joints bout à bout. Dans la réalisation proposée, cette face est celle qui est destinée à être la face inférieure du caisson. La jointure entre les deux panneaux extrêmes 7C, 7D est prévue transversale de manière à permettre la solidarisation de ces panneaux par une soudure unique ayant la longueur la plus courte possible, pour des raisons de bonne étanchéité. Elle peut bien entendu, si besoin est, être réalisée sur d'autres faces que la face inférieure et à n'importe quel endroit de la face choisie Dans une forme préférée de réalisation, les deux rives longitudinales de la bande 4, plane, comme présentée sur la figure 2, sont bordées par deux lignes de pliure longitudinales 8 qui sont échancrées au niveau des lignes de pliure transversales 6.

Deux pliages égaux et à angle droit sont réalisés, chacun selon l'une des lignes de pliures longitudinales, préalablement aux quatre pliages transversaux évoqués plus haut. Ils permettent de ménager une bande en saillie 9 sur chacune des deux rives des panneaux 7A, 7B, 7C, 7D, ainsi que le montre la figure 3.

Ces deux pliages initiaux sont réalisés vers la face de la bande 4 vers laquelle sont ultérieurement effectués les quatre pliages nécessités par le bouclage en ceinture formé par cette bande, pour que les bandes 9 saillent vers l'intérieur de l'élément creux perpendiculairement aux panneaux qui les comportent, ainsi que le montre la figure 4. Les échancrures 10, réalisées dans les bandes 9 au niveau des lignes de pliure transversales 6, sont réalisées de manière connue de l'homme de métier, pour permettre le rapprochement de deux portions de bande 9 portées par deux panneaux adjacents lors du pliage à angle droit au cours duquel ces panneaux sont rabattus l'un vers l'autre. Les portions de bandes 9 issues d'une même rive de bande 4 bordent intérieurement l'une des deux ouvertures d'extrémité de l'élément creux lorsque ce dernier est formé. Elles permettent l'appui et éventuellement la fixation des panneaux de fermeture 5, 5', comme classique en ce domaine. Dans une forme préférée de réalisation, diverses ouvertures 11 sont réalisées dans les parties de bande destinées à constituer les panneaux et ce lorsque la bande est encore plane comme présentée sur la figure 2. Ces ouvertures 11 sont par exemple celles qui sont nécessaires au passage de liaisons électriques soit au-dessus, soit au-dessous du caisson et qui permettent le montage de traversées de courant étanches, non représentées, et/ou le montage de tubes unipolaires, cintrés ou droits, pour le passage étanche d'éléments conducteurs de l'intérieur à l'extérieur du caisson, comme symbolisé par les tubes 12, 12' présentés sur la figure 4.

L'utilisation de tubes cintrés mis en place sous le caisson permet de supprimer le décrochement usuellement prévu pour le raccordement de câbles en partie basse de caisson, ce qui permet de simplifier la fabrication de ce dernier.

Les éléments conducteurs contenus dans les tubes unipolaires permettent le raccordement de câbles électriques unipolaires, non représentés, à l'appareillage électrique contenu dans le caisson, via des connecteurs non représentés. Des transformateurs de courant et de tension, non représentés, sont aussi susceptibles d'être associés aux éléments conducteurs évoqués ci; dessus dans des montages prenant place sous le caisson soit en sortie des tubes unipolaires dans le cas des transformateurs de tension, soit sur ces tubes dans le cas de transformateurs de courant toriques, selon des agencements connus de l'homme de métier.

Dans la réalisation présentée relative à un caisson pour cellule de distribution moyenne tension triphasée, il est prévu au moins un jeu de trois ouvertures 11 pour le passage de traversées de courant étanches dans le panneau 7B destiné à être situé au-dessus du caisson, et éventuellement deux jeux parallèles de trois ouvertures 11. Chaque jeu est ici prévu obliquement disposé par rapport aux bords du panneau qui le comporte, un axe d'alignement passant par le centre de chacune des trois ouvertures d'un jeu faisant par exemple un angle de 45° avec chacun des bords du panneau où ces ouvertures sont ménagées. Par contre, les ouvertures 11 destinées à s'ouvrir sous le caisson sont ici réalisées en un ou deux rangs de trois ouvertures ménagées dans la paroi destinée à constituer le dessous du caisson parallèlement aux bords de l'élément creux qui portent les portions de bande 9 d'une paroi de dessous obtenue par mise bout à bout des panneaux extrêmes 7C, 7D. Dans la réalisation présentée, deux ou quatre ouvertures 11 sont ménagées dans le panneau extrême 7C à proximité de l'une des rives et en parallèle à cette rive, l'autre ou les deux autres ouvertures 11 étant ménagées à un ou des niveaux correspondants dans le panneau extrême 7D, lorsque la bande 4 est encore plane avant pliage.

Dans une forme préférée de réalisation, une traverse métallique 13 est positionnée en partie centrale du caisson, entre les deux parois latérales 7A de l'élément creux de ce dernier auxquelles cette traverse est fixée. Un renfort de la structure du caisson est ainsi obtenu, il permet d'améliorer la tenue en pression ou éventuellement dépression de la cellule.

Selon une variante de réalisation présentée sur les figures 5 et 6, des bandes en saillie, différentes des bandes en saillie 9, présentées sur la figure 2 sont ménagées sur les rives des quatre panneaux qui constituent un élément creux 4X et qui correspondent aux panneaux 7A, 7B de l'élément creux 4. Ces quatre panneaux d'élément creux 4X sont agencés pour permettre la fixation et l'appui de panneaux de fermeture 5X, 5X', légèrement différents des panneaux 5 évoqués plus haut, notamment en vue d'augmenter la raideur du caisson obtenu. A cet effet un pli supplémentaire est ménagé au niveau de chacune des deux bandes en saillie 9X qui sont destinées à constituer les rives des panneaux de la ceinture que forme l'élément creux de manière à former une bordure externe 14X sur chacune des deux rives de chacun de ces panneaux. Les deux bordures externes 14X d'un panneau d'élément creux sont parallèles au panneau qui les porte.

Chaque panneau de fermeture 5X ou 5X' est respectivement bordé sur ses quatre côtés par autant d'éléments de bande 15X ou 15X' saillants. Ces éléments de bande sont réalisés chacun par pliage à angle droit d'un des bords de panneau, dans la même direction pour les quatre éléments ainsi formés. Les quatre éléments de bande 15X ou 15X' d'un panneau de fermeture 5X ou 5X' viennent se placer chacun contre une portion de bordure externe 14X dans l'ouverture délimitée par les portions de bordure externe situées d'un même côté de l'élément creux 4X. Une soudure 16X ou 16X' réalisé en bout entre chaque portion de bordure externe 14X et l'élément de bande 15X ou 15X' correspondant permet alors d'assurer la fixation des panneaux d'extrémité 5X, 5X' à l'élément creux 4X et l'étanchéité requise.

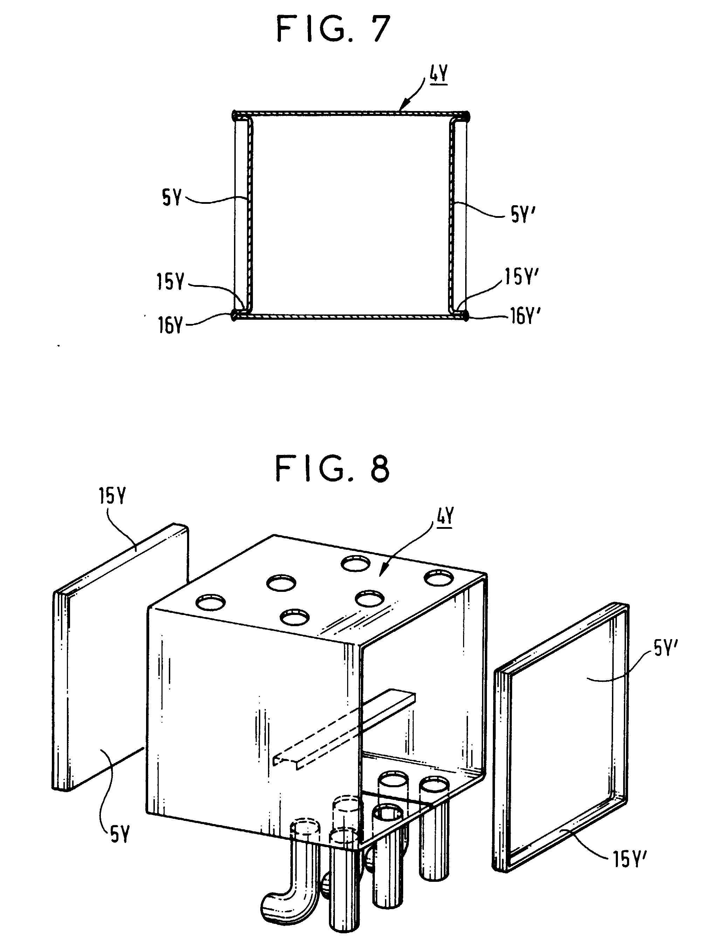

Selon une seconde variante de réalisation présentée en figure 7, l'élément creux 4Y diffère de l'élément creux 4 présenté en figure 4, en ce qu'il ne comporte pas de bandes en saillie sur les rives des panneaux qu'il comporte. Par contre chaque panneau de fermeture 5Y ou 5Y' est constitué de la même manière qu'un panneau 5X ou 5X' et comporte donc quatre éléments de bande saillants 15Y ou 15Y' réalisés par pliage des bords du panneau à angle droit et dans une même direction. Les quatre éléments de bande d'un panneau de fermeture viennent se placer dans l'ouverture délimitée par les panneaux constituant l'élément creux 4Y d'un côté de cet élément dans une position permettant la réalisation d'un soudage en bout 16Y ou 16Y' des éléments d'un panneau de fermeture aux panneaux de l'élément creux sur un des bords de cet élément.

## Revendications

1. Caisson métallique étanche pour cellule de distribution électrique moyenne tension destinée à être équipée d'un appareillage, comportant au moins un appareil de coupure, prévu relié à des circuits électriques extérieurs par l'intermédiaire de traversées de courant étanches, caractérisé en ce qu'il comporte un élément creux (4), à parois rectangulaires et à section transversale rectangulaire ou carrée, qui est prévu fermé par deux panneaux d'extrémité (5), cet élément étant notamment porteur de tubes unipolaires, cintrés ou droits, montés au niveau d'ouvertures ménagées dans celle des parois de l'élément creux qui est destinée à constituer le dessous du caisson pour permettre un passage de conducteurs électriques par l'intermédiaire de traversées de courant étanche entre l'intérieur et l'extérieur du caisson.

2. Caisson métallique étanche pour cellule de distribution électrique moyenne tension destinée à être équipée d'un appareillage, comportant au moins un appareil de coupure, prévu relié à des circuits électriques extérieurs par l'intermédiaire de traversées de courant étanches, caractérisé en ce qu'il comporte un élément creux (4), à parois rectangulaires et à section transversale rectangulaire ou carrée, qui est prévu fermé par deux panneaux d'extrémité (5) et qui est constitué d'une bande de tôle métallique, initialement plane, dont les extrémités ont été soudées en bout après une succession de pliages de même sens réalisés selon au moins trois lignes parallèles de pliure transversale (6) permettant de délimiter au moins quatre panneaux dont les deux extrêmes (7C, 7D) sont alignés et soudés bout à bout pour former l'une des parois latérales que comporte ledit élément.

3. Caisson, selon l'une des revendications 1, 2, caractérisé en ce que l'élément creux à parois rectangulaires possède au moins une de ses parois qui comporte une série d'ouvertures (11) pour des traversées de courant qui sont alignées sur au moins un rang dans la paroi qui les comporte et selon un axe d'alignement disposé obliquement par rapport aux bords du panneau (7B) constituant cette paroi.

4. Caisson, selon l'une des revendications 1, 2, 3, caractérisé en ce que l'élément creux à parois rectangulaires dispose d'au moins une paroi comportant une série d'ouvertures (11) pour des traversées de courant qui sont alignées sur au moins un rang dans cette paroi selon un axe d'alignement proche d'une des extrémités de l'élément et parallèle au bord du ou des deux panneaux (7C, 7D)alignés de cette paroi, à cette extrémité.

5. Caisson, selon l'une des revendications 1 à 4, caractérisé en ce qu'il comporte un élément creux parois rectangulaires dont une première paroi, formée par deux panneaux (7C, 7D) alignés et soudés bout à bout, comporte une série d'ouvertures (11) pour des traversées de courant qui sont alignées sur au moins un rang selon un axe d'alignement proche d'une des extrémités du tube et parallèle au bord formé par la paroi qui les comporte à cette extrémité et dont une autre paroi (7B) parallèle à la première paroi comporte une série d'ouvertures (11) pour des traversées de courant qui sont alignées sur au moins un rang selon un axe d'alignement disposé obliquement par rapport aux bords du panneau constituant cette autre paroi.

6. Caisson, selon l'une des revendications 1 à 5, caractérisé en ce qu'il comporte des portions de bande (9) qui sont obtenues par deux pliages initiaux, égaux et de sens opposés, ménagés selon deux lignes de pliure (8) parallèles aux rives de la bande plane initiale, et qui saillent vers l'intérieur de l'élément creux à parois rectangulaires aux extrémités de ce dernier perpendiculairement aux panneaux qui les portent respectivement.

7. Caisson, selon la revendication 6, caractérisé en ce que les portions de bande (9X) obtenues par deux pliages initiaux, égaux et de sens opposés, ménagés selon deux lignes de pliure parallèles aux rives de la bande plane initiale, qui saillent vers l'intérieur de l'élément creux à parois rectangulaires formant ceinture aux extrémités de cet élément perpendiculairement aux panneaux, ont subies un pliage supplémentaire donnant naissance à une bordure externe (14X) sur chacune des deux rives des panneaux de ceinture, les deux bordures externes d'un panneau étant parallèles à ce panneau qui les porte.

8. Caisson, selon l'une des revendications 1, 2, 3, 4, 5 ou 7, caractérisé en ce qu'il comporte des panneaux de fermeture (5X, 5X' ou 5Y, 5Y') respectivement bordé sur ses quatre côtés par autant d'éléments de bande saillants (15X ou 15X') réalisés chacun par pliage à angle droit d'un des bords de panneau, dans la même direction pour les quatre éléments ainsi formés. 9/ Caisson, selon l'une des revendications 1 à 9, caractérisé en ce qu'il comporte une traverse métallique de renfort (13) positionnée en partie centrale de caisson entre deux parois latérales (7A) parallèles de l'élément en forme de tube aux quelles elle est fixée.
